# EUROPÄISCHE PATENTANMELDUNG

(11) **EP 4 653 809 A1**
(43) Veröffentlichungstag der Anmeldung: **26.11.2025**
(21) Anmeldenummer: 25176985.7
(22) Anmeldetag: 16.05.2025
(51) Int. Cl.: G01B 11/25

(54) **VORRICHTUNG FÜR BILDERFASSUNG UND PROJEKTION**

(30) Priorität: 24.05.2024 DE 202024102699 U; 24.05.2024 DE 202024102700 U; 24.05.2024 DE 102024204814
(71) Anmelder: MAHA Maschinenbau Haldenwang GmbH & Co. KG, 87490 Haldenwang (DE)
(72) Erfinder: BACHMANN, Yannic, 87474 Buchenberg (DE); SCHMID, Markus, 87647 Kraftisried (DE)
(74) Vertreter: MERH-IP Matias Erny Reichl Hoffmann Patentanwälte PartG mbB

(57) **Zusammenfassung**

Die vorliegende Offenbarung betrifft unter anderem Vorrichtung für Bilderfassung und Projektion für eine Inspektionsvorrichtung umfassend: eine Kameraeinheit zur visuellen Erfassung einer Umgebung der Inspektionsvorrichtung; eine Projektoreinheit zur Projektion von Licht auf eine Projektionszielfläche; wobei die Projektionseinheit dazu eingerichtet ist, visuelle Informationen auf eine Vielzahl unterschiedlich beschaffener und von der Kameraeinheit erfassten Oberflächen zu projizieren.

## Beschreibung

Die vorliegende Offenbarung betrifft unter anderem eine Vorrichtung für Bilderfassung und Projektion.

### Hintergrund

Aufgrund der zunehmend komplexer werdenden Anforderungen an Vorrichtungen zur automatisierten Inspektion von Kraftfahrzeugen und deren auf verschiedenen Prinzipien beruhenden Assistenzsystemen, sind in der Vergangenheit verschiedene Versuche gemacht worden, die Eigenschaften eines Fahrzeugs automatisiert und präzise zu erfassen.

Eine gattungsgemäß aus dem Stand der Technik bekannte Lösung zur Posenbestimmung ist das sogenannte Outside-In Motion Tracking. Bei diesem Ansatz zur Bestimmung von Position und Orientierung einer Inspektionsvorrichtung werden statisch im Raum montierte Kameras und am zu erfassenden Objekt befestigte passive oder aktive Marker oder Reflektoren verwendet. Außerdem existiert zu diesem Zweck das sogenannte Inside-Out Motion Tracking. Dabei bewegt sich im Gegensatz zum Outside-In Motion Tracking die Kamera zusammen mit dem zu erfassenden Objekt. Die Kamera kann zur Bestimmung ihrer Position verschiedene, in der Umgebung statisch angebrachte Marker verwenden. Diese Marker können LEDs, reflektierende Marker oder Laser-Emitter sein.

Die oben beschriebenen Techniken weisen allerdings Probleme auf, die sie für die Erfassung und Inspektion eines Kraftfahrzeugs in einer Werkstatt oder einem sonstigem Messraum als ungeeignet erscheinen lassen. Zum einen werden für das Outside-In Motion Tracking eine hohe Anzahl an Kameras benötigt, um das zu erfassende Objekt aus jeder Richtung aufnehmen zu können und zum anderen erfordert die Auswertung der Kamerabilder in Echtzeit bei einer hohen Anzahl an Kameras eine sehr starke Recheneinheit was, falls eine hohe Genauigkeit gewünscht wird, zu einem starken Preisanstieg solcher Systeme führt. Für das Inside-Out Motion Tracking ist ein entsprechender Aufbau zwar oft kostengünstiger, aber es entstehen bei der Messung eines Fahrzeugs oft verdeckte Bereiche, die aufwendig ausgeleuchtet werden müssen, wobei reflektierende Oberflächen oft zu Fehlmessungen führen.

Außerdem kann auch das Problem auftreten, dass Reflektionen der Marker in spiegelnden Flächen die Messung verfälschen können. Ferner hat die verwendete Kamera an den Rändern des Fischaugenobjektivs keine hohe Genauigkeit. Die Positionierung und Vermessung der Marker im Raum ist zudem aufwendig und muss händisch in ein Programm eingetragen werden. Es besteht außerdem keine Rückführbarkeit der Messwerte auf eine genormte Messgröße.

Auch angesichts der zuvor gemachten Ausführungen ergibt sich die Problemstellung, dass es bislang nicht möglich war, u.a. eine Vorrichtung für Bilderfassung und Projektion, wie von den Merkmalen der unabhängigen Ansprüche vorgeschlagen, bereitzustellen. Die abhängigen Ansprüche betreffen bevorzugte Ausführungsbeispiele.

Eine Posenbestimmung einer Inspektionsvorrichtung umfasst das Kalibrieren einer Kameraeinheit durch die Aufnahme einer Kalibriertafel oder Markierung aus verschiedenen/unterschiedlichen Blickwinkeln und Abständen, wobei bevorzugt zumindest zwei unterschiedliche Blickwinkel und/oder Abstände genutzt werden. Beispielsweise werden zwei, fünf, zehn, 20, 50, 100 oder mehr unterschiedliche Abstände bei gleichem Blickwinkel, zwei, fünf, zehn, 20, 50 100 oder mehr unterschiedliche Blickwinkel bei gleichem Abstand, oder mehr als zwei, fünf, zehn, 20, 50 100 oder mehr unterschiedliche Blickwinkel und/oder Abstände verwendet. Ferner umfasst das Kalibrieren eines Messkopfes durch das zeitgleiche Erfassen einer Kalibriertafel oder Markierung durch zwei oder mehr Kameras der Kameraeinheit, das Kalibrieren eines Messplatzes/Messvolumens durch optisches Vermessen der relativen Position der Kalibriertafel oder Markierung und das Erstellen eines Koordinatensystems das die Positionen aller Kalibriertafeln oder Markierungen enthält.

Unter einer Inspektionsvorrichtung, die bevorzugt auch Teil der vorliegenden Offenbarung und beanspruchter Gegenstand sein kann, ist hierbei vorzugsweise eine Kombination aus zumindest einem Messkopf, zumindest einer optionalen mobilen Plattform und möglicher weiterer optionaler Anbauten zu verstehen, wobei insbesondere die mobile Plattform bevorzugt dazu eingerichtet ist, autonom in einem Messraum zu navigieren. Ferner kann diese einen beweglichen Positionierarm mit mindestens einem Freiheitsgrad aufweisen und den oder mehrere am Positionierarm befestigte(n), dadurch frei im Messraum positionierbaren Messkopf aufweisen. Mit anderen Worten handelt es sich bei der Inspektionsvorrichtung bevorzugt um ein autonom auf einer planen Fläche navigierendes System mit einem Messkopf an einem Roboterarm oder Linearantrieb. Andere Arten der Fortbewegung, die dazu geeignet sind, den Messkopf im dem Messraum zu platzieren oder zu bewegen, können durch die Verwendung diverser mobiler Plattformen ermöglicht werden. Diese sind bevorzugt auch Teil der vorliegenden Offenbarung und werden später beschrieben.

Somit ist es möglich mit der mobilen Plattform und dem beweglichen Positionierarm oder Roboterarm, den Messkopf, der an dem Positionierarm befestigt ist, frei im Messraum zu positionieren. In Hinblick auf den Roboterarm oder Positionierarm ist es besonders bevorzugt, wenn der Roboterarm durch einen mehrere Freiheitsgrade aufweisenden Mehrachs-Roboterarm oder durch einen mit einem Linearantrieb ausgestatteten Positionierarm verwirklicht ist, wobei die Anzahl der Freiheitsgrade je nach Anwendung gewählt werden kann.

Unter dem Begriff Messraum oder auch Messvolumen ist hier ein räumlich begrenzter dreidimensionaler Raum zu verstehen, in dem die Inspektionsvorrichtung Messungen an Messobjekten durchführt und sich an den Koordinaten innerhalb des Messraumes orientiert. Dabei wird die Position eines an der mobilen Plattform befestigten Messkopfes vorzugsweise durch ein absolutes Positionsbestimmungssystem für ein Volumen von beispielsweise 10 x 10 x 3 Metern bestimmt. Abweichende Dimensionierungen und abweichende dreidimensionale Formen von möglichen Messvolumina sind auch möglich und hier explizit mit eingeschlossen. Vorzugsweise liegt die Genauigkeit des Positionierungssystems bei weniger als einem Millimeter und weniger als 1/60° im Raum. Die Erstellung des Koordinatensystems soll im weiteren Verlauf der Beschreibung noch beschrieben werden.

Unter dem Begriff Messobjekt ist gemäß einer bevorzugten Ausführungsform des hier beschriebenen Gegenstandes ein Kraftfahrzeug zu verstehen, das sich zur Inspektion in dem Messraum befindet. Dabei kann es sich um einen Personenkraftwagen, ein Nutzfahrzeug/LKW oder ein Motorrad handeln, bei denen eine Inspektion in Hinsicht auf verschiedene Eigenschaften oder Funktionen des Kraftfahrzeugs durchgeführt wird. Dabei kann beispielsweise eine Vermessung der Achsgeometrie, eine Analyse der Oberflächenbeschaffenheit der nach außen hin sichtbaren Karosseriebauteile oder an dem Fahrzeug angebrachten Anbauteile, eine Oberflächenanalyse der am Fahrzeug verbauten Scheiben, eine Bestimmung der Ausrichtung der Scheinwerfer oder aktiven Sensoren des Fahrzeugs sowie eine Bestimmung der vom Fahrzeug emittierten Geräusche durchgeführt werden. Die genannten Beispiele sollen der Veranschaulichung dienen und sind durch weitere übliche Eigenschaften oder Attribute des Messobjekts oder Bauteile erweiterbar.

Ferner kann die Inspektionsvorrichtung einen elektrischen Antrieb aufweisen der dazu eingerichtet sein kann, omnidirektionale Fahrmanöver zu ermöglichen. Vorzugsweise handelt es sich bei dem elektrischen Antrieb um eine mobile Plattform die über elektrische Motoren, zum Antrieb von an der mobilen Plattform angebrachten Rädern, verfügt. Dabei können die Räder vorzugsweise nach dem Prinzip des Differential-Drive, des Mecanum-Wheel-Drive oder des Omni-Wheel-Drive ausgestaltet sein, um ein freies Navigieren der Inspektionsvorrichtung im Messraum zu ermöglichen. Darüber hinaus ist es entsprechend dem hier beschriebenen Gegenstand auch möglich, dass die Inspektionsvorrichtung sich auch auf andere Weise durch den Messraum bewegt oder durch diesen bewegt wird. Mit anderen Worten, es ist für die hier beschriebene Posenbestimmung nicht notwendig, dass die Inspektionsvorrichtung sich fahrend oder autonom fahrend durch den Messraum bewegt. Dementsprechend kann die Inspektionsvorrichtung auch so ausgestaltet sein, dass sie eine mit einem Messkopf ausgestattete Flugdrohne oder ein durch eine Bedienperson tragbares Gestell oder ein Haltegriff ist, an dem der Messkopf angebracht ist. Des Weiteren kann die mobile auch durch einen Seilzugroboter oder ein von einer Bedienperson tragbares Stativ verwirklicht werden.

Ferner kann der Messkopf vorzugsweise dazu eingerichtet sein, eine Vielzahl verschiedener Messinstrumente aufzunehmen. Gemäß einer besonders bevorzugten Ausgestaltung können an dem Messkopf folgende Messinstrumente angebracht oder in ihn integriert werden: eine 3D-Kamera, mindestens eine 2D-Kamera, eine Radarspaltantenne, eine Radar-Target-Simulator, eine Kamerakalibriertafel, ein Lichteinstellgerät, eine Ultraschallspaltantenne, eine Hyperspektralkamera, eine akustische Kamera, eine Schallpegelmessgerät, eine Abgassonde. Die hier aufgeführten Sensoren oder Messinstrumente stellen jedoch keine abschließende Aufzählung dar, sondern können gemäß verschiedener Einsatzzwecke oder zu messenden Eigenschaften des Messobjekts angepasst und erweitert werden. Ferner kann es auch Teil einer vorzugsweisen Ausgestaltung der Inspektionsvorrichtung sein, dass die Sensoren oder Messinstrumente nicht ausschließlich am Messkopf angebracht oder in diesen integriert sind, sondern auch in die mobile Plattform integriert oder an dieser angebracht sein können.

Ferner ist es gemäß den hier beschriebenen Eigenschaften der Inspektionsvorrichtung auch möglich, den Roboterarm mit mehr als einem Messkopf auszustatten oder die zu montierenden Messköpfe und den Roboterarm so auszugestalten, dass sie leicht von einer Bedienperson gewechselt werden können. Dementsprechend können mit den verschiedenen Messköpfen Aufnahmen von verschiedenen elektromagnetischen oder mechanischen Wellen aufgenommen werden, welche beispielsweise durch einen später aus den Messdaten erstellten digitalen Zwilling des Messobjekts vereinheitlicht visualisiert werden können. Als Beispiele für verwendete elektromagnetische Wellen können sichtbares Licht, Radar oder kohärente Strahlung (Laser) zum Einsatz kommen. Als Beispiele für mechanische Wellen können Ultraschall oder Schallwellen im hörbaren Bereich zum Einsatz kommen.

Unter einem digitalen Zwilling ist hier ein virtuelles 3D-Modell des Messobjekts zu verstehen, das auf einer Darstellung durch eine durch den oder die Messköpfe erfassten Punktwolke, erfassten Flächen oder Körper oder aufgezeichneten Attributen des Messobjektes basiert. In dem bevorzugten Fall, in dem das Messobjekt ein Personenkraftwagen oder dergleichen ist, können anhand der genannten Daten weitere Berechnungen durchgeführt werden, die beispielsweise zur Bestimmung folgender Eigenschaften des Messobjekts herangezogen werden können: Position und/oder Ausrichtung der Räder, Winkel des fahrzeugeigenen Radars oder anderer aktiver Sensoren in Relation zur Geometrie des Fahrzeugs, Winkel der fahrzeugeigenen Scheinwerfer in Relation zur Geometrie des Fahrzeugs, Oberflächenbeschaffenheit des Fahrzeugs, am Fahrzeug befindliche Anbauteile, Beschaffenheit des Fahrzeugunterbodens, Beschaffenheit der Windschutzscheibe, Geräuschemission des Fahrzeugs.

Ferner kann zumindest eines der am Messkopf angebrachten Messinstrumente dazu eingerichtet sein eine Hinderniserkennung und eine Umgebungserkennung durchzuführen. Eine derartige Erkennung kann durch die im Messkopf installierten Messinstrumente durchgeführt werden und dient dem Zweck, die Inspektionsvorrichtung mit ihrer Umgebung im Messraum interaktiv wechselwirken zu lassen. Folglich kann die Umgebung der Inspektionsvorrichtung durch die im Messkopf installierten Kameras erfasst werden und dadurch eine Änderung der Position des Messobjekts oder die Gegenwart einer Bedienperson detektiert werden und entsprechend darauf reagiert werden. Im Falle einer selbständig navigierenden beziehungsweise sich autonom im Messraum bewegenden Inspektionsvorrichtung kann die beschriebene Umgebungserkennung auch dazu verwendet werden, die Inspektionsvorrichtung zu einer vorbestimmten Parkposition oder zu einer Ladestation zu steuern.

Ferner kann die Inspektionsvorrichtung eine Recheneinheit mit Datenspeicher aufweisen die dazu eingerichtet ist, Diagnosedaten und Umgebungsdaten zu verarbeiten und zu speichern. Unter Diagnosedaten sind hierbei alle Daten zu verstehen, die während der Inspektion oder Vermessung eines Messobjekts durch die Inspektionsvorrichtung aufgenommen und/oder verarbeitet werden. Der Begriff Diagnosedaten kann in diesem Zusammenhang synonym mit dem Begriff Messdaten verwendet werden. Durch die Integration einer Recheneinheit mit Datenspeicher in die Inspektionsvorrichtung ist die Inspektionsvorrichtung in der Lage, selbständig ihre Umgebung abzutasten und darin zu navigieren. Die Recheneinheit ermöglicht es, auf neue Gegebenheiten im Messraum zu reagieren oder auf gespeicherte Inspektionsmuster zurückzugreifen, um unter reduziertem Rechenaufwand die Inspektion eines Messobjekts durchzuführen.

Ferner kann die Inspektionsvorrichtung ein Modul zur drahtlosen Kommunikation aufweisen. Dabei kann sich die Inspektionsvorrichtung mit einem externen Netzwerk verbinden. Ein externes Netzwerk kann im vorliegenden Fall ein drahtloses Netzwerk (WLAN) sein, das im Messraum verfügbar ist und in das sich die Inspektionsvorrichtung zur Kommunikation mit externen Geräten oder Vorrichtungen einwählt. Durch die drahtlose Verbindung der Inspektionsvorrichtung zu einem externen Gerät, wie beispielweise einem Server oder einem zur Interaktion mit der Inspektionsvorrichtung eingerichtetem Personal Computer, ist es möglich, die Inspektionsvorrichtung mit aktuellen Mess- oder Diagnoseaufträgen zu versorgen sowie die von der Inspektionsvorrichtung aufgenommenen Messdaten zur weiteren Auswertung auf ein externes Computersystem zu übertragen. Dementsprechend ist es gemäß dem hier beschriebenen Gegenstand auch möglich, dass die Inspektionsvorrichtung selbst ein drahtloses Netzwerk, zum Beispiel unter Verwendung eines WLAN-Hotspots erstellt, in das sich externe Geräte zur Kommunikation mit der Inspektionsvorrichtung einwählen können.

Ferner kann die Inspektionsvorrichtung einen Energiespeicher zur autonomen Stromversorgung umfassen. Durch eine derartige Konfiguration kann die Inspektionsvorrichtung, ohne an eine externe Energieversorgung angeschlossen zu sein, frei im Messraum navigieren ohne durch etwaige Stromkabel oder andere Verbindungen zu externen Gerätschaften eingeschränkt zu werden. Nicht abschließende Beispiele für einen solchen Energiespeicher sind im vorliegenden Fall die dem Fachmann bekannten, für diesen Einsatzzweck geeigneten, Batterien oder Kondensatoren oder sonstige zum mobilen Einsatz geeignete Energiespeicher.

Ferner kann zumindest eines der Messinstrumente der Inspektionsvorrichtung eine 3D-Kamera sein, die dazu eingerichtet ist den Messraum zu erfassen. Durch die Verwendung einer oder mehrerer Kameras , mit der oder denen es möglich ist, die Umgebung der Inspektionsvorrichtung dreidimensional zu erfassen, kann eine erhöhte Präzision bei der Navigation im Messraum erreicht werden. Des Weiteren wird dadurch die Fähigkeit der Inspektionsvorrichtung verbessert, auf Änderungen im Messraum zu reagieren die beispielsweise durch die Anwesenheit einer Bedienperson hervorgerufen werden. Hierbei ist anzumerken, dass auch andere Messinstrumente, die dazu geeignet sind, den Messraum zu erfassen, anstatt oder zusätzlich zu einer 3D-Kamera zum Einsatz kommen können. Beispiele für solche Messinstrumente sind unter anderem 2D-Kameras, Lidar oder sonstige Sensoren, die dem Fachmann für diese Aufgabe als geeignet bekannt sind.

Ferner kann die Recheneinheit dazu eingerichtet sein, ein absolutes Koordinatensystem zur Navigation im Messraum und zur Posenbestimmung des Messkopfes im Messraum zu erstellen. Die Erstellung des absoluten Positionierungssystems kann dabei vorzugsweise durch die Bestimmung von Abständen und relativen Winkeln des Messkopfes der Inspektionsvorrichtung zu fest im Messraum montierten Markern erfolgen und wird später noch eingehend beschrieben.

Ferner kann die Recheneinheit dazu eingerichtet sein, die von der Inspektionsvorrichtung aufgenommenen Diagnosedaten zu sammeln und an eine externe Einrichtung zur Datenverarbeitung zu übermitteln oder anhand der Diagnosedaten einen digitalen Zwilling des Messobjekts zu erzeugen und diesen an eine externe Einrichtung zur Datenverarbeitung auszugeben. Eine externe Einrichtung zur Datenverarbeitung kann in diesem Zusammenhang ein Personal Computer, ein Server oder ein Cloudspeicher sein, auf den eine Bedienperson der Inspektionsvorrichtung zugreifen kann, um die Diagnosedaten einzusehen und/oder auszuwerten. Unter einem digitalen Zwilling ist eine virtuelle Darstellung des Messobjekts zu verstehen, die aus verschieden gearteten Diagnosedaten zusammengefügt werden kann, um beispielsweise eine virtuelle Repräsentation des Messobjekts zu erzeugen. Weitere Erklärungen zu den Eigenschaften eines solchen digitalen Zwillings werden im Folgenden noch gemacht.

Ferner kann der Positionierarm dazu eingerichtet sein, sechs Freiheitsgrade aufzuweisen. Wie bereits erwähnt ist die Anzahl der Freiheitsgrade aber nicht auf diese Anzahl beschränkt, sondern kann je nach Konfiguration der Inspektionsvorrichtung auch bevorzugt zwei bis fünf oder auch mehr als sechs betragen. Dabei kann der Positionierarm vorzugsweise ein elektrisch oder elektromechanisch angetriebener Roboterarm sein, der über eine Vielzahl von steuerbaren Gelenken eine räumliche Ausrichtung des Endabschnitts des Roboterarmes in Relation zur mobilen Plattform der Inspektionsvorrichtung ermöglicht. Durch die Verwendung eines entsprechenden Knickarm- oder Gelenkarmroboters ergeben sich somit, in Verbindung mit der autonom navigierenden mobilen Plattform der Inspektionsvorrichtung, nahezu unbegrenzte Möglichkeiten einen am Endabschnitt des Positionierarmes angebrachten Messkopf im Messraum zu positionieren. Dadurch kann ein Messobjekt beziehungsweise Fahrzeug einer Vielzahl von Messvorgängen und Analysen aus verschiedenen räumlichen Positionen unterzogen werden.

Ferner kann, wie bereits zuvor erläutert, die Inspektionsvorrichtung zumindest ein Messinstrument, das zur Aufnahme verschiedener elektromagnetischer oder mechanischer Wellen eingerichtet sind, aufweisen. Diese Messinstrumente sind vorzugsweise im Endabschnitt des Positionierarmes in dem Messkopf angeordnet und können durch das Zusammenspiel von autonom navigierender mobiler Plattform und dem beweglichen Roboterarm nahezu frei im Messraum positioniert und ausgerichtet werden.

Unter einer Kameraeinheit ist eine vorzugsweise am Messkopf angebrachte oder in ihn integrierte Vorrichtung zu verstehen, die dazu eingerichtet ist visuelle Aufnahmen von ihrer Umgebung zu erstellen und das so erzeugte Bildmaterial in digitaler Form zur Weiterverarbeitung durch einen Computer oder vergleichbare Vorrichtung zur Datenverarbeitung zur Verfügung zu stellen. Im vorliegenden Fall können eine Vielzahl an unterschiedlichen Kameras eine Kameraeinheit bilden oder zu einer Kameraeinheit kombiniert werden. Dementsprechend kann die Inspektionsvorrichtung vorzugsweise dazu eingerichtet sein, die Kameradaten selbstständig zu verarbeiten und bei der Navigation, der Erstellung des Koordinatensystems oder der Analyse der vom Messobjekt aufgenommenen Daten beziehungsweise Diagnosedaten zu verwenden.

Unter einer Kalibiertafel ist gemäß dem hier beschriebenen Gegenstand eine plane Fläche zu verstehen, auf der geometrische Muster aufgebracht sind, die dazu geeignet sind, eine digitale Kamera zu kalibrieren. Mit anderen Worten, müssen die Muster allein oder in Verbindung miteinander dazu geeignet sein, eine Kameraeinheit in Bezug auf zu Vermessende Abstände und zu Bestimmende Raumwinkelpositionen von aufgezeichneten Objekten zu kalibrieren. In Frage kommen hierfür sämtliche dem Fachmann geläufigen Kalibriermuster, die zur Kalibrierung der entsprechenden Kameratypen geeignet sind.

Ferner können die Kalibriertafeln, wenn es sachdienlich ist, durch einfacher als die Kalibriertafeln gestaltete Markierungen ersetzt oder ergänzt werden. Diese Markierungen können im oder an den Rändern des Messraums angebracht werden und sollen der Inspektionsvorrichtung dazu dienen, die Positionsbestimmung während des Betriebs sicherzustellen oder zu unterstützen.

Anhand der hier beschriebenen Kalibriertafeln oder Markierungen ist es demnach möglich eine intrinsische Kalibrierung einzelner Kameras durchzuführen, um eine jeweilige Kamera durch die oben beschriebene Aufnahme mehrere Bilder aus unterschiedlichen Positionen und Blickwinkeln zu kalibrieren. Ferner ermöglichen die Kalibriertafeln und Markierungen, eine extrinsische Kalibrierung einzelner Kameras in Relation zueinander durchzuführen. Mit anderen Worten kann somit die Kalibrierung eines Multikamerasystems, das aus zuvor intrinsisch kalibrierten Kameras besteht, anhand von extrinsischen Parametern durchgeführt werden.

Das zuvor beschriebene Koordinatensystem ist vorzugsweise ein absolutes Koordinatensystem, das dazu geeignet ist, jedem Punkt im Messraum eine Koordinate mit einer für den beschriebenen Anwendungszweck hohen Genauigkeit zuzuordnen. Ferner ist es gemäß der hier beschriebenen Posenbestimmung für eine Inspektionsvorrichtung besonders bevorzugt möglich, in dem absoluten Koordinatensystem eine Punktwolke auf der Basis der aufgenommenen Messdaten beziehungsweise Diagnosedaten zu erzeugen, um so eine digitale beziehungsweise virtuelle Repräsentation der aufgenommenen Messwerte zu erzeugen und auszugeben. Ferner ist auch eine Ausgabe als dreidimensionale Punktewolke von gleichen oder ähnlichen Messwerten besonders bevorzugt, auf Basis derer ein digitaler Zwilling des Messobjekts mit mehreren Informationsschichten erstellt werden kann. Ein solcher digitaler Zwilling kann dementsprechend aus Punktewolken, die verschiedene Attribute des Messobjekts enthalten, aufgebaut sein. Diese Attribute können beispielsweise den detektierten Oberflächen, dem detektierten Volumen des Messobjekts, einer Leuchtstärkenverteilung der Scheinwerfer oder einem vom Messobjekt ausgehenden Schallpegel zugeordnet werden.

Die zuvor beschriebene Inspektionsvorrichtung hat den Vorteil, dass eine mobile Prüfvorrichtung bereitgestellt werden kann, die ein Messobjekt beziehungsweise Fahrzeug in Hinblick auf mehrere Kriterien gleichzeitig komplett autonom oder teilautonom untersuchen kann. Dabei ist die Inspektionsvorrichtung gemäß der zuvor beschriebenen bevorzugten Ausführungsform in der Lage, autonom ein Messobjekt zu detektieren, es in der Folge komplett eigenständig abzufahren und gezielt die angeforderten Messwerte oder Prüfkriterien abzuprüfen und die dabei entstehenden Daten zu speichern sowie zu verarbeiten.

Ein weiterer Vorteil der hier beschriebenen Inspektionsvorrichtung ist, dass eine Achsvermessung eines Messobjekts oder zu prüfenden Fahrzeugs nicht parallel erfolgt, sondern, dass jede Achse beziehungsweise die Position jedes einzelnen Rades einzeln vermessen werden kann und die relativen Positionen der entsprechenden Bauteile später über die Zusammenführung der Messdaten zu einer Punktewolke bestimmt werden können. Dadurch wird ein üblicher zur Achsvermessung herangezogener Aufbau überflüssig und es können genauere Messwerte durch ein weniger komplexes sowie eigenständiges System erreicht werden. Ferner ist es durch die umfangreicheren Messwerte auch möglich, nicht nur die Achsgeometrie eines Fahrzeugs zu bestimmen, sondern auch die Ausrichtung der einzelnen Räder in Relation zur Karosserie oder diverser Anbauteile des Fahrzeugs.

Die hier beschriebene Inspektionsvorrichtung ermöglicht es ferner, verschiedene Prüfkriterien wie Achsgeometrie, Lichtkegel oder Oberflächenschäden, die gegenwärtig noch über manuelle oder teilautomatisierte Einzelsysteme überprüft werden, durch ein einzelnes System autonom oder teilautonom abzuprüfen. Dadurch können umfangreiche Prüfvorgänge abgekürzt werden und die dafür notwendige Anzahl an Prüfsystemen minimiert werden.

Das hat den Vorteil, dass es mit einer Inspektionsvorrichtung durch die Durchführung der oben beschriebenen Schritte möglich ist, selbständig ein Fahrzeug zu erfassen, es zu umfahren und verschiedene Messungen daran vorzunehmen.

Ferner kann die Kalibriertafel oder Markierung zum Kalibrieren der Kamera eine fest in einem Messraum montierte Kalibriertafel oder Markierung sein. Dabei bedeutet die Formulierung fest im Messraum montiert, dass die Kalibriertafeln oder Markierung zum Kalibrieren der Kamera sich an statischen Positionen im Messraum befinden, die für den Kalibrierprozess günstige Eigenschafen aufweisen. So sind Positionen, in denen die besonders leicht für die Inspektionsvorrichtung zugänglich sind oder mit deren üblichen Startpunkt zusammenfallend sowie Positionen die eine minimale Anpassung der beweglichen Kameraposition der Inspektionsvorrichtung selbst notwendig machen, besonders bevorzugt.

Eine solche Anordnung bietet den Vorteil, dass ein Kalibriervorgang für eine Kamera schnell und an die Gegebenheiten des Messraums oder der Peripherie des Messraums angepasst durchgeführt werden kann. Ferner ermöglicht eine derartige Platzierung der Kalibriertafeln vor jedem neuen Inspektionsvorgang einen Kalibriervorgang durchzuführen, um die optimale Funktion der Kameraeinheit sicherzustellen.

Ferner kann die zu Kalibrierende Kamera an einem Messkopf der Inspektionsvorrichtung installiert sein. Dabei ist es besonders bevorzugt, wenn der Messkopf sich am Ende des Roboterarmes oder Positionierarmes der Inspektionsvorrichtung befindet. Somit ist unter einem Messkopf die Anordnung von Kameras zu verstehen, die sich am Ende eines Positionierarmes oder Roboterarmes in einer definierten Position und Ausrichtung zueinander befinden. Des Weiteren können neben den Kameras, wie zuvor erläutert, auch andere Vorrichtungen zur Aufnahme von Messdaten beziehungsweise Diagnosedaten an dem Messkopf angebracht oder in diesen integriert sein. Darüber hinaus kann der Messkopf vorzugsweise als eigenständiges System ausgeführt sein, das an einer Vielzahl von mobilen Plattformen angebracht werden kann und mit diesen kompatibel ist. Mit anderen Worten: Der hier beschriebene Messkopf kann vorzugsweise dazu eingerichtet sein, neben einer selbstfahrenden mit Rädern oder Rollen ausgestatteten und über einen Roboterarm verfügenden Plattform auch an einer Flugdrohne, an einem automatisierten Seilzug, einem im Messraum installierten Linearantrieb oder einer durch eine Bedienperson gehaltenem Gestell beziehungsweise Haltegriff montiert zu werden. Andere dem Fachmann geläufige Möglichkeiten eine geeignete mobile Plattform bereitzustellen, können hierbei auch zum Einsatz kommen. Ein so ausgeführter Messkopf bietet den Vorteil hoher Flexibilität bei der Verwirklichung zur Posenbestimmung der Inspektionsvorrichtung, er variabel an einer Vielzahl von mobilen Plattformen montiert werden kann ohne seine Funktionalität zu verlieren.

Zusammenfassend kann die hier beschriebene Inspektionsvorrichtung als die funktionelle Einheit aus Messkopf und mobiler Plattform und optional weiterer Anbaubauteile verstanden werden, die es ermöglicht, die Pose der Inspektionsvorrichtung innerhalb des Messraumes anhand von im Messraum angebrachten Markierungen zu bestimmen.

Darüber hinaus kann der Messkopf der Inspektionsvorrichtung vorzugsweise eine Vorrichtung für Bilderfassung und Projektion umfassen. Die Vorrichtung für Bilderfassung und Projektion kann dabei eine Kameraeinheit zur visuellen Erfassung einer Umgebung der Inspektionsvorrichtung und eine Projektoreinheit zur Projektion von Licht auf eine Projektionszielfläche umfassen, wobei die Projektionseinheit dazu eingerichtet ist, visuelle Informationen auf eine Vielzahl unterschiedlich beschaffener und von der Kameraeinheit erfassten Oberflächen zu projizieren. Eine solche Vorrichtung Bilderfassung und Projektion kann ebenfalls Teil des beanspruchten Gegenstandes sein und ist Teil dieser Offenbarung.

Ferner kann die Projektionseinheit ein Projektor zur Projektion statischer oder bewegter Bilder sein. Mit anderen Worten, die Projektionseinheit oder auch der Projektor ist ein optisches Gerät, mit dem eine zweidimensionale Vorlage durch geeignete Führung der Lichtstrahlen an anderer Stelle vergrößert als Bildprojektion, kurz Projektion, auf einer Bildfläche abgebildet wird.

Ferner kann die Kameraeinheit mindestens eine 2D- -Kamera sein, die dazu eingerichtet ist ein 3D-Bild eines Messobjekts anhand einer Projektion der Projektoreinheit auf die Projektionszielfläche zu erstellen. Bevorzugt kann dieses 3D-Bild durch beispielsweise das Active-Stereo oder das Structured-Light Verfahren erstellt werden. Besonders bevorzugt kann dieses 3D-Bild durch das Time-Coded-Structured-Light-Verfahren erstellt werden, bei dem ein 3D-Bild durch eine 2D-Kamera erzeugt werden kann, die ein zu vermessendes Objekt beobachtet, auf das ein (Streifen-)Muster durch einen Projektor projiziert wird. Die verwendete 2D-Kamera kann hierbei aus einer Reihe von für den Einsatzzweck geeigneten Kameras ausgewählt werden. Beispielsweise können eine RGB-Kamera oder eine monochrome Kamera, die im sichtbaren oder unsichtbaren Spektralbereich aufzeichnet, zum Einsatz kommen, um entsprechendes vom Projektor abgestrahltes Licht zur Erstellung eines 3D-Bildes zu verwenden.

Die zuvor genannten Vorgehensweisen bieten die Vorteile, dass eine Punktwolke des zu inspizierenden Messobjekt mit hoher Genauigkeit erstellt werden kann und dass sie die Möglichkeit bieten, texturlose Flächen zu erfassen und aufzunehmen. Dies erweist sich vor allem bei der Abtastung von lackierten beziehungsweise sehr glatten Oberflächen eines Kraftfahrzeugs als nützlich.

Ferner ist aber auch möglich die Kameraeinheit als eine eigenständige, vom Projektor unabhängige 3D-Kameraauszuführen. Demgemäß ist es möglich die Projektionseinheit getrennt von der Kameraeinheit zu betreiben und somit eine ununterbrochene Projektion von für eine Bedienperson relevanten visuellen Informationen zu gewährleisten.

Ferner kann die Vorrichtung für Bilderfassung und Projektion dazu eingerichtet sein, die Verzerrung eines Bildes anhand eines 3D-Bildes der Projektionszielfläche so festzulegen, dass Unebenheiten auf der Projektionsfläche des Messobjekts ausgeglichen werden. So kann bei Verwendung nicht-definierter krummer Oberflächen gemäß einem von der Kamera zuvor aufgenommen Bild das projizierte Bild so verzerrt werden, dass die Unebenheiten der Oberfläche ausgeglichen werden.

Vorzugsweise kann eine solche Projektionszielfläche die Oberfläche eines Fahrzeugs, ein für technische Inspektion oder Wartungsarbeiten relevantes Bauteil wie beispielsweise ein Rad oder ein bestimmter Bereich eines Werkstatbodens oder eine eigens zu diesem Zweck errichtete Leinwand oder andere Projektionszielfläche sein. Dies Konfiguration hat den Vorteil, dass der Projektor dazu verwendet werden kann, visuelle Anleitungen für eine Bedienperson oder einen Werkstattmitarbeiter direkt auf die Oberfläche des Messobjekts beziehungsweise eines zu bearbeitenden oder zu inspizierenden Fahrzeugs oder andere Objekte zu projizieren.

Ferner kann die Vorrichtung für Bilderfassung und Projektion dazu eingerichtet sein eine dynamische Anpassung des projizierten Bildes an die Umgebungsbedingungen rund um ein Messobjekt anzupassen. Mit anderen Worten kann die Vorrichtung für Bilderfassung und Projektion dazu geeignet sein, eine dynamische Anpassung der Farbe und Intensität der Projektion an die Umgebungsbedingungen vorzunehmen. Soll beispielsweise eine Markierung auf ein rotes Objekt projiziert werden, kann die Farbe der Markierung auf eine Komplementärfarbe eingestellt werden. Ferner ist es möglich, in einer sehr hellen Umgebung die Intensität der Projektion zu erhöhen.

Ferner kann die Vorrichtung für Bilderfassung und Projektion dazu eingerichtet sein, interaktive Inhalte oder eine interaktive Bedienoberfläche auf einer Projektionszielfläche anzuzeigen. Dazu können verschiedene Markierungen wie Kreuze, Rahmen oder genaue Umrisse, sowie Texte, Zeichnungen oder 3D-Modelle projiziert werden. Dabei können die Markierungen entweder automatisch von der Inspektionsvorrichtung erstellt werden, oder durch einen Remote-Support-Mitarbeiter. Im letzteren Fall kann das von der Inspektionsvorrichtung aufgenommene Bild an den Remote-Support-Mitarbeiter übertragen werden, wobei dann vom Mitarbeiter hinzugefügte Markierungen vom Projektor wiedergegeben werden.

Ferner kann die Vorrichtung für Bilderfassung und Projektion dazu eingerichtet sein, relevante Bereiche einer Projektionszielfläche automatisch zu erkennen und durch eine Lichtprojektion hervorzuheben. Dementsprechend kann die Inspektionsvorrichtung dazu verwendet werden, interaktive Schulungen und Wartungsarbeiten durchzuführen. So können Schritt-für-Schritt-Anleitungen für Wartungs- und Reparaturaufgaben direkt auf ein Fahrzeug, einen Prüfstand oder eine Hebebühne in denen sich das Fahrzeug möglicherweise befindet projiziert werden.

Ferner kann die Vorrichtung für Bilderfassung und Projektion dazu eingerichtet sein, eine Benutzeroberfläche zu projizieren und Bewegungen und Berührungen eines Benutzers in Echtzeit zu erfassen. Besonders bevorzugt kann die Projektoreinheit dazu verwendet werden, um ein User-Interface auf eine Projektionszielfläche zu projizieren. Einem Benutzer oder einer Bedienperson ist es dann möglich, mit dem User-Interface zu interagieren und Eingaben darauf zu tätigen. Die Erfassung von Benutzereingaben kann dabei durch eine 2D- oder 3D-Kamera im Messkopf des Inspektionsvorrichtung die Bewegungen und Berührungen eines Benutzers in Echtzeit erfassen. Dies kann durch die Erkennung der Position und Bewegungen der Hände oder Finger oder, falls das User-Interface auf den Boden projiziert wird, der Füße des Benutzers erfolgen. So kann der Benutzer entweder die Oberfläche, auf die das User-Interface projiziert wird, wie einen Touch-Screen bedienen, oder durch Gesten in mit dem System interagieren.

Ferner kann die Vorrichtung für Bilderfassung und Projektion dazu eingerichtet sein, Kalibriermuster und/oder eine Positionierungshilfe auf eine Projektionszielfläche zu projizieren. Unter einem Kalibriermuster ist in diesem Zusammenhang ein Muster zu verstehen, dass von Herstellern von Fahrzeugen mit eingebauten ADAS-Systemen dazu verwendet wird, die in die ADAS-Systeme integrierten Kameras zu kalibrieren. Diese Kalibiermuster sind meist auf Kalibriertafeln angebracht und weisen je nach Fahrzeughersteller verschiedene Muster auf. Gemäß dem beschriebenen Gegenstand ist es möglich die Projektionseinheit dazu zu verwenden, um ein solches Kalibriermuster auf eine leere Kalibriertafel oder Leinwand zu projizieren. Ferner ist es auch möglich, dass die Kalibriertafel oder Leinwand bereits ein Muster aufweist, das durch die Projektion ergänzt oder überdeckt wird. Die Tafel oder Leinwand kann statisch im Messraum oder in dessen unmittelbarer Nähe angebracht, durch eine Bedienperson manuell positioniert werden oder auf einer zweiten, im Messraum vorhandenen Inspektionsvorrichtung montiert sein. Dementsprechend kann die leere Kalibriertafel durch die Vorrichtung für Bilderfassung und Projektion detektiert werden und die Größe, Ausrichtung, Verzerrung und Intensität des projizierten Kalibriermusters gemäß den zuvor beschriebenen Prinzipien an die Position und Ausrichtung der Kalibriertafel angepasst werden. Falls die verwendete Projektionstafel oder Leinwand und die Inspektionsvorrichtung eingerichtet sind, um eine absolute Lagebestimmung im Messraum durchzuführen, kann die Größe und die Verzerrung des Projektionsmusters auch direkt von der Vorrichtung für Bilderfassung und Projektion berechnet werden.

Zusätzlich kann, falls eine, wie oben als eine Option beschriebene, leere Kalibriertafel auf einem Stativ befestigt ist, die Vorrichtung für Bilderfassung und Projektion auch dazu verwendet werden, eine Bedienperson mit Positionierungshilfen zu unterstützen. Zu diesem Zweck wird, während das Stativ mit der leeren Kalibriertafel von einem Anwender bewegt wird, die Position und Ausrichtung der Kalibriertafel von der Vorrichtung für Bilderfassung und Projektion laufend erfasst. Dabei können die Position und die Ausrichtung der der Kalibriertafel entweder über die Kamera mit Markern an den Rändern der Tafel oder über einen an der Kalibriertafel angebrachten Positionssensor zur absoluten Lagebestimmung erfasst werden. Währen der manuellen Ausrichtung der Kalibriertafel durch eine Bedienperson können durch den Projektor Informationen wie Pfeile oder andere Hinweise auf die Kalibriertafeln projiziert werden, um der Bedienperson dabei zu helfen, die Kalibriertafel in der korrekten Position und Ausrichtung aufzustellen.

Eine so konfigurierte Vorrichtung für Bilderfassung und Projektion kann dazu verwendet werden Sicherheits- und Warnhinweise zur Visualisierung von Sicherheitsbereichen innerhalb der Arbeitsumgebung des Fahrzeugs auszugeben. Dazu kann auch der geplante Fahrweg oder Bewegungspfad der Inspektionsvorrichtung gehören. Außerdem kann die Projektionseinheit dazu verwendet werden, relevante Daten über das zu bearbeitende Fahrzeug und/oder die Inspektionsvorrichtung anzuzeigen. Ferner besteht der Vorteil, dass eine Bedienperson oder ein Benutzer bei der Fehlersuche unterstützt werden kann. Dies ermöglicht das effizientere Erstellen von Diagnosen durch das Hervorheben von für die Inspektion relevanten Bereichen. Diese Bereiche können gegebenenfalls automatisch durch die Inspektionsvorrichtung detektiert werden und nach der Markierung durch die Projektionseinheit durch einen Benutzer genauer inspiziert werden. Außerdem ermöglicht der beschriebene Gegenstand eine präzisere Ausführung von Arbeitsschritten durch direkte visuelle Anleitungen, eine flexible und vielseitige Anwendbarkeit in verschiedenen Arbeitsumgebungen und Arbeits- oder Inspektionsszenarien und eine vereinfachte Bedienung die es auch unerfahrenem Personal ermöglicht komplexe Arbeiten durchzuführen.

Ferner kann die Kameraeinheit mindestens eine Weitwinkelkamera und mindestens eine Kamera mit Normalobjektiv oder mindestens zwei Kameras mit Normalobjektiv umfassen. Gemäß dem hier beschriebenen Gegenstand ist es ein besonders bevorzugter Aspekt, mehrere Kalibriertafeln oder Markierungen zur Posenbestimmung der Inspektionsvorrichtung zu verwenden. Dadurch kann die Genauigkeit bei der Posenbestimmung deutlich erhöht werden. Allerdings ist es dabei notwendig, mehrere Positionstafeln oder Markierungen, die gegebenenfalls verhältnismäßig weit voneinander entfernt sind oder sich in entgegengesetzten Richtungen befinden mit einer Kamera zu erfassen.

Im Folgenden soll unter dem Begriff Pose die Position und Ausrichtung der gesamten Inspektionsvorrichtung im absoluten Koordinatensystem des Messraums verstanden werden, während unter dem Begriff Pose des Messkopfes die momentane Position und räumliche Ausrichtung des Messkopfes im absoluten Koordinatensystem des Messraums zu verstehen ist. Des Weiteren ist unter der Pose des Roboterarmes oder Positionierarmes der Inspektionsvorrichtung die Position der Gelenke und damit die Haltung des Roboterarmes oder Positionierarmes zu verstehen. Zusammenfassend ergibt sich demgemäß die Pose der gesamten Inspektionsvorrichtung aus der Pose des Messkopfes, der Pose des Roboterarms oder Positionierarms und der Pose der mobilen Plattform.

Dementsprechend ist es möglich, die Position und Ausrichtung (Pose) der gesamten Inspektionsvorrichtung im Messraum über die Pose des Messkopfes und die Pose des Roboterarmes oder Positionierarmes zu bestimmen. Mit anderen Worten ist der Messkopf besonders bevorzugt in der Lage über die Erfassung der Kalibriertafeln oder Markierungen im Messraum seine eigene Pose zu bestimmen, wonach über die Bestimmung der Pose des Roboterarms oder Positionierarms, an dessen Ende der Messkopf befestigt ist, die Pose der mobilen Plattform abgeleitet werden kann. Somit ermöglicht es der hier beschriebene Gegenstand nicht nur präzise die Pose des Messkopfes in Bezug auf das absolute Koordinatensystem im Messraum zu bestimmen, sondern auch die zur Änderung der Pose des Messkopfes notwendigen Änderungen der Pose des Roboterarmes und der Pose der mobilen Plattform zu bestimmen. Bevorzugt ergibt sich somit eine Inspektionsvorrichtung, in der Lage ist autonom im Messraum zu navigieren, um eine vollkommen automatisierte oder geleitete teilautomatisierte Inspektion eines Messobjekts zu ermöglichen.

Zur Lösung des Problems gleichzeitig mehrere Kalibriertafeln oder Markierungen zur Posenbestimmung der gesamten Inspektionsvorrichtung verwenden zu können, wäre es möglich, im Gegensatz zum hier beanspruchten Gegenstand, ein Fischaugenobjektiv mit einem sehr großen Sichtfeld von 180° oder darüber zu verwenden. Fischaugenobjektive haben allerdings den Nachteil, dass gerade an den Bildrändern eine starke Linsenverzeichnung vorliegt, was sich selbst nach einer softwareseitigen Korrektur negativ auf Genauigkeit der Posenbestimmung auswirkt. Außerdem verteilt sich die Auflösung der Kamera bei Fischaugenobjektiven auf einen sehr großen Bereich, was effektiv zu einer Verschlechterung der Auflösung und somit erneut zu einer geringeren Genauigkeit bei der Posenbestimmung führt.

Gemäß der hier beschriebenen Lösung wird vorgeschlagen, das vorstehende Problem unter Ausnützung der Tatsache zu lösen, dass nicht das gesamte Blickfeld von über 180° von Interesse ist, sondern nur die Stellen, an denen sich die Kalibriertafeln oder Markierungen relativ zum Messkopf tatsächlich befinden. Da die Inspektionsvorrichtung sich im Messraum zu Beginn der Messung oder Inspektion auf vorbestimmten Bahnen im Messraum bewegen kann, sind die Stellen im Blickfeld des Messkopfes, in denen mit Kalibriertafeln oder Markierungen zu rechnen ist, als bekannt oder konstant anzunehmen. Dies ermöglicht es, anstatt einer Kamera mit einem sehr großen Blickfeld, mehrere Kameras mit einem kleineren Blickfeld von vorzugweise 15° zu verwenden.

Die zuvor beschriebene Konfiguration hat den Vorteil, dass durch das Ersetzen einer Kamera mit einem sehr großen Blickfeld beispielsweise drei Kameras mit einer Optik beziehungsweise einem Blickfeld verwendet werden können, die nahezu verzerrungsfrei sind. Somit kann eine Optimierung des Messkopfes auf die entsprechenden Positionen und Abstände der Kalibriertafeln oder Markierungen relativ zur Inspektionsvorrichtung erreicht werden. Dadurch ergibt sich eine stark erhöhte Genauigkeit bei der Posenbestimmung.

Ferner kann die Kameraeinheit aus einer Vielzahl von Kameras mit voneinander abweichenden Blickrichtungen bestehen. Diese Anordnung einer Vielzahl von Kameras auf dem Messkopf dient dabei der Durchführung einer Stereokalibrierung. Dabei ist es besonders vorteilhaft, wenn die Kameras mit Normalobjektiv in entgegengesetzte Blickrichtungen ausgerichtet sind. Aufgrund der Bedingung, dass immer eine Kalibriertafel oder Markierung gleichzeitig von zwei Kameras gesehen werden muss, sind Überlappungen der Sichtbereiche der einzelnen Kameras für die Justage und räumliche Kalibration des Messkopfes notwendig. Des Weiteren ist es auch möglich, einen Teil der Vielzahl an Kameras nur temporär zur Kalibration zu verwenden und sie später wieder vom Messkopf zu entfernen. Allerdings besteht dann die Einschränkung, dass eine regelmäßige Selbstjustage oder Kalibration des Messkopfes durch die Inspektionsvorrichtung nicht möglich ist.

Ferner kann der Messkopf an einem frei beweglichen Roboterarm der Inspektionsvorrichtung angeordnet sein, wobei der Roboterarm in einer Vielzahl von Freiheitsgraden bewegbar ist.

Dabei ist es besonders vorteilhaft, wenn der Roboterarm wie oben beschrieben einen oder besonders bevorzugt mehrere Freiheitsgrade aufweist und der Messkopf an dessen Ende angebracht ist, um den vollen Bewegungsspielraum eines entsprechend montierten Messkopfes auszuschöpfen. Durch diese Anordnung ist es möglich, die Vermessung der Kalibriertafeln und Markierungen und ihrer relativen Positionen zueinander durchzuführen und anschließend ein absolutes Koordinatensystem zu erzeugen, in dem alle Kalibriertafeln und/oder Markierungen mit ihrer entsprechenden Position/Pose enthalten sind. Da der Messkopf wie zuvor beschrieben an der Spitze beziehungsweise dem Ende des Roboterarmes befestigt ist, kann eine Kalibration der Inspektionsvorrichtung auf den Messraum automatisiert durchgeführt werden. Der frei bewegliche Roboterarm fährt dabei alle Positionen, die zur Lokalisierung und relativen Positionsbestimmung der Markierungen nötig sind ab und erstellt dabei aus den Positionsdaten ein absolutes Koordinatensystem des Messraums.

Ferner können die fest im Messraum installierten Kalibriertafeln oder Markierungen geeichte geometrische auf einer Fläche angebrachte Messmittel sein. Durch eine Normierung der auf den im Messraum installierten Kalibriertafeln oder Markierungen kann die Genauigkeit der Positionsbestimmung der Inspektionsvorrichtung und die Genauigkeit der Posenbestimmung des Messkopfes erhöht werden. Geeichte geometrische Formen tragen dabei besonders zur Reproduzierbarkeit der Positionsbestimmungsvorgänge sowie deren Genauigkeit bei, da die im Messkopf enthaltenen Kameras auf die entsprechenden Farben, Formen und Muster hin optimiert werden können. Darüber hinaus ist eine Rückführung der auf den Kalibriertafeln oder Markierungen vorhandenen geeichten Muster auf SI-Einheiten möglich, was die Bestimmung der Messgenauigkeit stark verbessert.

Ferner können die fest im Messraum installierten Kalibriertafeln oder Markierungen den Messraum räumlich begrenzen. Besonders vorteilhaft ist dabei eine Anordnung, bei der der Messraum durch eine quaderförmiges Messvolumen beschrieben ist, an dessen Ecken und Kanten und/oder an dessen oberer Begrenzungsfläche die Kalibriertafeln oder Markierungen mit einer dem Messraum zugewandten Orientierung angebracht sind. Die Inspektionsvorrichtung kann so besonders leicht ein geometrisches Model des Messraums generieren in das dann das absolute Koordinatensystem eingefügt wird.

Darüber hinaus wird hier ein System zur Posenbestimmung für eine Inspektionsvorrichtung beschrieben, das eine Inspektionsvorrichtung mit einer Kameraeinheit zur visuellen Erfassung eines Messraumes und eine Vielzahl von fest in dem Messraum installierten Kalibriertafeln oder Markierungen zur Posenbestimmung umfasst.

Das hier beschriebene System zur Posenbestimmung für eine Inspektionsvorrichtung ist insbesondere dazu eingerichtet, die Posenbestimmung einer Inspektionsvorrichtung auszuführen. Die zuvor Beschriebenen Eigenschaften und Vorteile treffen somit auch auf das besagte System zur Posenbestimmung zu.

Insbesondere kann das zuvor beschriebene System zur Posenbestimmung dazu eingerichtet sein: eine Selbstkalibrierung anhand der relativen Position der Kameraeinheit und den fest installierten Kalibriertafeln oder Markierungen durchzuführen; dass eine Kameraeinheit an einem Messkopf der Inspektionsvorrichtung installiert ist; die Kameraeinheit mindestens eine Weitwinkelkamera und mindestens eine Kamera mit Normalobjektiv oder mindestens zwei Kameras mit Normalobjektiv umfassen; die Kameraeinheit eine Vielzahl von Kameras mit voneinander abweichenden Blickrichtungen umfasst; der Messkopf auf einem frei beweglichen Roboterarm der Inspektionsvorrichtung angeordnet ist, der in einer Vielzahl von Freiheitsgraden bewegbar ist; die fest im Messraum installierten Kalibriertafeln und Markierungen geeichte geometrische Messmittel sein, die auf einer Fläche angeordnet sind; die fest im Messraum installierten Kalibriertafeln oder Markierungen den Messraum räumlich begrenzen.

Darüber hinaus wird hier die Erstellung eines digitalen Zwillings eines Messobjekts beschrieben. Das umfasst: Anlegen eines absoluten Koordinatensystems in einem Messraum; Bestimmung der Pose eines Messkopfes in dem Messraum; Autonome Navigation in dem Messraum; Aufzeichnen der Eigenschaften eines Messobjekts das in dem Messraum angeordnet ist; Zusammenführen der einzelnen Messdaten; und Erstellen eines digitalen Zwillings des Messobjekts.

Durch das Erstellen eines digitalen Zwillings eines zu vermessenden oder zu inspizierenden Fahrzeugs können so, entsprechend der zuvor gemachten Beschreibung der Vermessung des Fahrzeugs, umfassende Daten über das Fahrzeug gesammelt werden und in besagtem digitalem Zwilling zusammengeführt werden. Dadurch können die Messungen für eine Bedienperson visuell leicht verständlich aufbereitet werden. Ferner lassen sich durch eine dreidimensionale Darstellung eines durch die Inspektionsvorrichtung vermessenen Fahrzeugs die Herkunft der Daten und eventuelle Problemfelder leicht durch eine Bedienperson lokalisieren.

Ferner können weiterhin die folgenden Schritte umfasst sein: Darstellen der Messwerte durch Punktwolken, Flächen, Körper oder Attribute; Zusammenführen der Messwerte; Erstellen eines virtuellen 3D-Modells des Messobjekts; Analysieren der geometrischen Form, der Oberfläche oder der Emission von elektromagnetischen oder mechanischen Wellen des Messobjekts.

Wie bereits beschrieben, lassen sich die von dem Messkopf der Inspektionsvorrichtungen aufgenommenen elektromagnetischen und mechanischen Schwingungen in einem virtuellen 3D-Modell zusammenfügen. Dies kann durch die erwähnten Punktwolken, durch identische oder ähnliche Messwerte definierte Flächen und Körper mit von einer Recheneinheit zugeteilten Attributen erreicht werden. Somit können geometrische Anordnungen und Verhältnisse sowie Oberflächenbeschaffenheiten oder die Emission von Schall oder Licht, als Eigenschaften, die dem Fahrzeug zu eigen sind, leicht durch eine Bedienperson analysiert und erkannt werden.

Zusammenfassend ermöglicht es der beschriebene Gegenstand, durch die Anordnung von in verschiedenen Winkeln orientierten Kameras in dem Messkopf der Inspektionsvorrichtung eine genaue Detektion der Position und der Ausrichtung (Pose) sowohl des Messkopfes als auch der gesamten Inspektionsvorrichtung selbst anhand von 2D Kameras zu realisieren während sich die Inspektionsvorrichtung im Messraum befindet. Die Genauigkeit wird darüber hinaus noch weiter dadurch erhöht, dass die Posenbestimmiung lediglich in einem grob vordefinierten Bereich wie dem Messraum notwendig ist und somit nicht zu jeder Zeit gewährleistet sein muss und deshalb Kameras mit engerem Sichtfeld und geringerer Verzerrung zum Einsatz kommen können.

Des Weiteren kann durch die entgegengesetzten Kameras, die an dem Messkopf angebracht oder in diesen integriert sind, eine sehr genaue Winkelposition von vorzugsweise weniger als 1/60° errechnet werden. Dieser Vorteil steht daher im Kontrast zu herkömmlichen Systemen mit einer Weitwinkelkamera, in denen die Genauigkeit bei größerem Messvolumen abnimmt.

Es sei angemerkt, dass die hier beschriebenen Vorgänge, z.B. bezüglich der Posenbestimmung, der Bilderfassung, der Projektion, auch als Verfahren beansprucht werden können und entsprechende Verfahrensansprüche Teil der Offenbarung sein können.

Außerdem bietet der hier beschriebene Gegenstand den Vorteil, dass eine selbständige Kalibrierung der Kameras, des Messkopfes und des Messraumes durch den frei beweglichen Positionierarm oder Roboterarm, der auf einer autonom navigierenden mobilen Plattform installiert sein kann, jederzeit möglich ist.

Ferner bieten sich durch die Nutzung eines zur Erstellung von 3D-Bildern in den Messkopf integrierten Projektors als wie zuvor beschriebene Projektionseinheit die Vorteile, dass effektive Kosten gesenkt werden können und eine kompaktere Bauweise ermöglicht wird. Außerdem ermöglicht die Projektor-Integration eine schnellere, intuitivere und flexiblere Interaktion von Bedienpersonal mit einem zu inspizierenden Fahrzeug und der Inspektionsvorrichtung.

Des Weiteren bietet der zuvor beschriebene Gegenstand den Vorteil, dass ein fahrerloses Transportsystem für einen frei beweglichen Messkopf geschaffen werden kann, das autonom ein Messobjekt oder zu inspizierendes Fahrzeug erkennt und gezielt abfährt, um es in Hinblick auf unterschiedliche Kriterien zu prüfen.

### Kurzbeschreibung der Figuren

Figur 1 zeigt schematisch den Aufbau eines Systems zur Posenbestimmung einer Inspektionsvorrichtung
Figur 2 zeigt schematisch den Aufbau eines weiteren Systems zur Posenbestimmung einer Inspektionsvorrichtung
Figur 3 zeigt schematisch den Aufbau eines weiteren Systems zur Posenbestimmung einer Inspektionsvorrichtung
Figur 4 zeigt schematisch den Aufbau eines weiteren Systems zur Posenbestimmung einer Inspektionsvorrichtung
Figur 5 zeigt ein vergleichsweises Anordnungsbeispiel einer Kamera mit Fischaugenobjektiv und einer Ersatzanordnung mit drei Kameras
Figur 6 zeigt ein Anordnungsbeispiel von Kameras und Markierungen zur Posenbestimmung
Figur 7 zeigt ein weiteres Anordnungsbeispiel von Kameras und Markierungen zur Posenbestimmung
**Figur 8** zeigt ein weiteres Anordnungsbeispiel von Kameras und Markierungen zur Posenbestimmung
**Figur 9** zeigt ein weiteres Anordnungsbeispiel von Kameras und Markierungen zur Posenbestimmung
**Figur 10** zeigt ein Schema zur kameragestützten Kalibration eines Messkopfes einer Inspektionsvorrichtung auf einen Messraum
**Figur 11a** zeigt ein Beispielbild für einen Inspektionsvorgang an einem Fahrzeug
**Figur 11b** zeigt ein Beispielbild für einen Inspektionsvorgang an einem Fahrzeug
**Figur 12** zeigt ein Beispielbild für einen erzeugten digitalen Zwilling
**Figur 13** zeigt eine beispielhafte Ausführungsform einer Inspektionsvorrichtung

### Beschreibung der Figuren

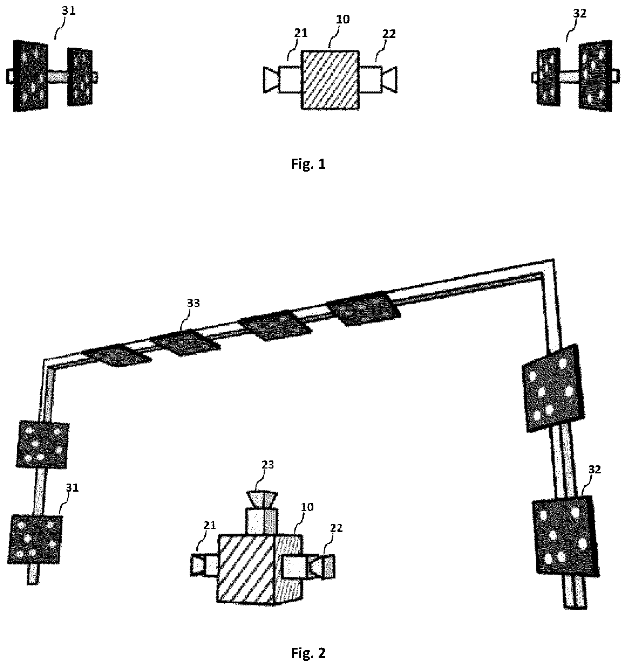

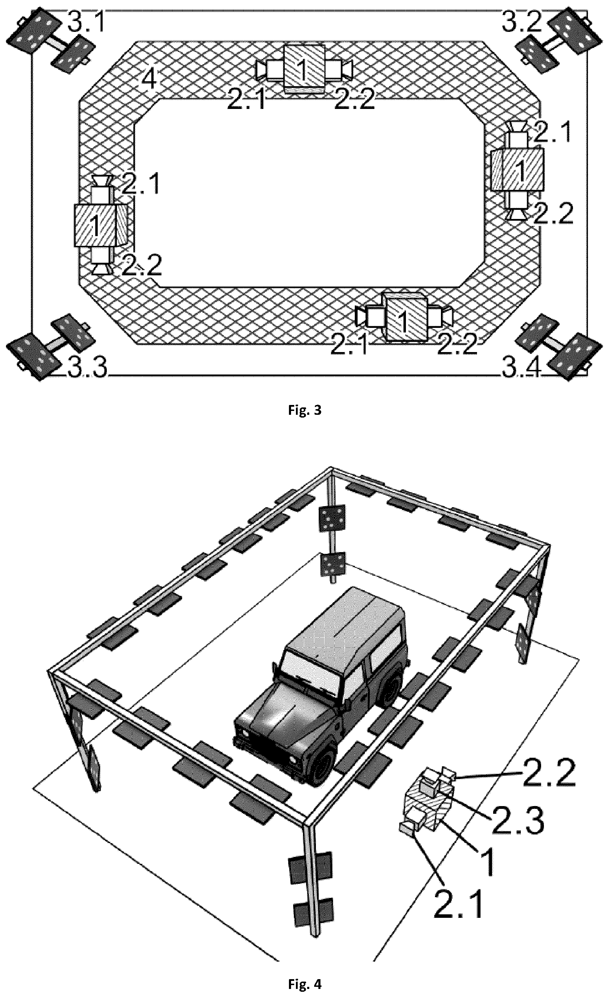

Fig. 1 zeigt beispielhaft einen Minimalaufbau entsprechend dem hier beschriebenen Offenbarungsgehalt, wobei Kalibriertafeln und/oder Markierungen 31, 32 (bzw. "3.1", "3.2", usw. in den Anordnungsbeispielen der Figuren 3 und 4) fest in einem Messraum montiert sind, sowie zwei oder mehr Kameras 21, 22 (bzw. "2.1", "2.2", usw. in den Anordnungsbeispielen der Figuren 3 und 4) an einer selbständig navigierenden Inspektionsvorrichtung 10 (bzw. "1" in den Anordnungsbeispielen der Figuren 3 und 4) montiert sind.

Durch eine in die Inspektionsvorrichtung integrierte Rechen- und Energieeinheit ist es möglich eine Vielzahl von Kameras ohne zusätzlichen Aufwand an dem Messkopf anzubringen oder in diesen zu integrieren. Im Vergleich zu einem herkömmlichen Vorgang, das eine Miniaturkamera mit sehr weitem Blickwinkel verwendet, können wie hier beschrieben mehrere größere Kameras mit höherer Auflösung und engerem Blickwinkel an dem Messkopf angebracht werden, da der Roboterarm der Inspektionsvorrichtung ein entsprechendes Gewicht tragen kann. In der in Figur 1 gezeigten Konfiguration ist es folglich möglich, durch den Einsatz von zwei Kameras 21, 22, die in entgegengesetzter Richtung angeordnet sind und zwei Markierungen 31, 32 an den gegenüberliegenden Seiten des abgebildeten länglichen Messraums, eine Bestimmung der Pose der Inspektionsvorrichtung und eine Bestimmung der Pose des Roboterarms durchzuführen. Dieser Aufbau hat jedoch die Einschränkung, dass sich die Inspektionsvorrichtung annähernd auf einer Geraden zwischen den Markierungen bewegen muss.

Figur 2 zeigt schematisch eine Weiterentwicklung der in Figur 1 gezeigten Minimalanordnung, bei der noch weitere Markierungen 33. an der oberen räumlichen Begrenzung des Messraums angebracht werden, die von einer dritten Kamera 23 erfasst werden, um die Genauigkeit der Bestimmung von Position und Winkel im Raum nochmals zu erhöhen.

Ein weiterer beispielhafter Aufbau ist in Figur 3 gezeigt. Hier bewegt sich die Inspektionsvorrichtung auf einer in der Draufsicht rechteckigen Bahn 4 auf dem Boden des Messraums. Durch das Aufstellen der Markierungen, 3.1 bis 3.4 in einem 45° Winkel zu den Längsseiten des quaderförmigen Messraums, sind bei Bewegungen entlang der annähernd rechteckförmigen Bahn immer zwei Markierungen durch die beiden entgegengesetzten Kameras des Messkopfes sichtbar. An den Ecken der annähernd rechteckförmigen Bahn sind hier jedoch, bei der zum Richtungswechsel der Inspektionsvorrichtung notwendigen Drehung, kurzzeitig keine Markierungen durch die Kameras sichtbar. In diesen Fällen kann die Positionsbestimmung vorübergehend durch ein sekundäres System übernommen werden. Dafür kann beispielsweise Odometrie, eine inertiale Messeinheit oder SLAM-Navigation über verbaute Kameras und/oder andere Sensoren verwendet werden. Das sekundäre System kann eine höhere Ungenauigkeit als Posenbestimmung anhand der Kameras und Markierungen haben, da es nur für einen kurzen Zeitraum verwendet wird, in dem keine Messungen am Fahrzeug durchgeführt werden.

Figur 4 zeigt beispielhaft eine Weiterentwicklung der in den Figuren 1 bis 3 gezeigten Anordnungen. Figur 4 verdeutlicht einen der Hauptaspekte des hier beschriebenen Gegenstandes, der die Verwendung von einer Vielzahl von Markierungen zur Bestimmung der Pose der gesamten Inspektionsvorrichtung sowie der Bestimmung der Pose des Roboterarmes ist. Entsprechend der Darstellung wird hier das Problem, dass weit voneinander entfernte Markierung oder Markierungen, die sich in entgegengesetzter Richtung befinden, nur durch eine Kamera mit sehr weitem Blickfeld und den entsprechenden optischen Nachteilen erfasst werden können dadurch, dass die verwendeten Kameras nicht das gesamte Blickfeld abtasten, sondern nur die Bereiche in denen sich typischerweise Markierungen befinden, gelöst.

Da die Inspektionsvorrichtung im vorliegenden Fall auf einer annähernd rechteckigen Bahn fährt, sind die Stellen im Blickfeld der Kameras, an denen mit Markierungen zu rechnen ist als bekannt und konstant anzunehmen. Dies ermöglicht anstatt einer Kamera mit sehr weitem Blickfeld eine Vielzahl von Kameras mit schmälerem Blickfeld zu verwenden.

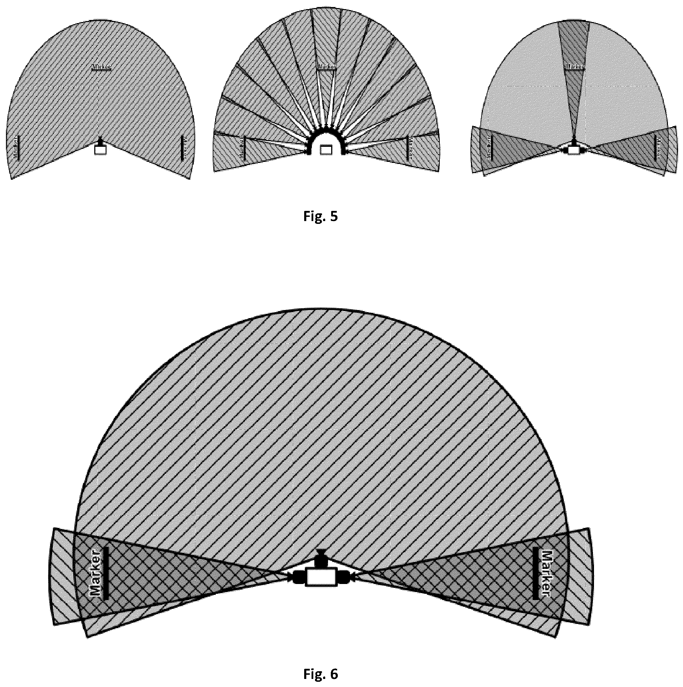

Figur 5 verdeutlicht das zuvor beschriebene Prinzip noch einmal. In der Abbildung im linken Teil ist das Blickfeld einer Kamera mit weitem Blickfeld von über 180° abgebildet. Für das hier Beschriebene kann diese Kamera gemäß der mittleren Abbildung auch durch eine Anordnung mehrerer Kameras mit schmalem Blickfeld abgebildet werden. Wie aus der mittleren Abbildung ersichtlich ist, sind hier nur drei Kameras für die Erfassung der Markierungen relevant. Somit ergibt sich die Anordnung, die in der rechten Abbildung von Figur 5 gezeigt ist.

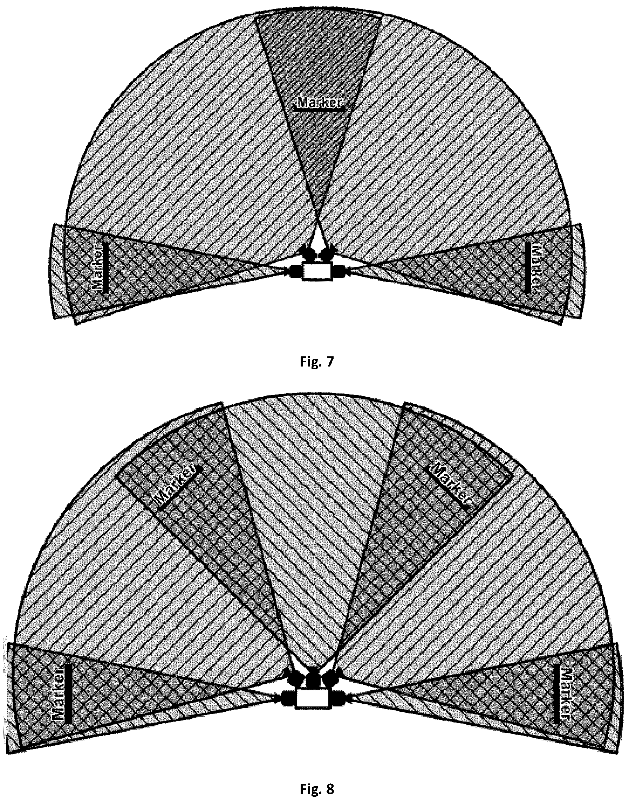

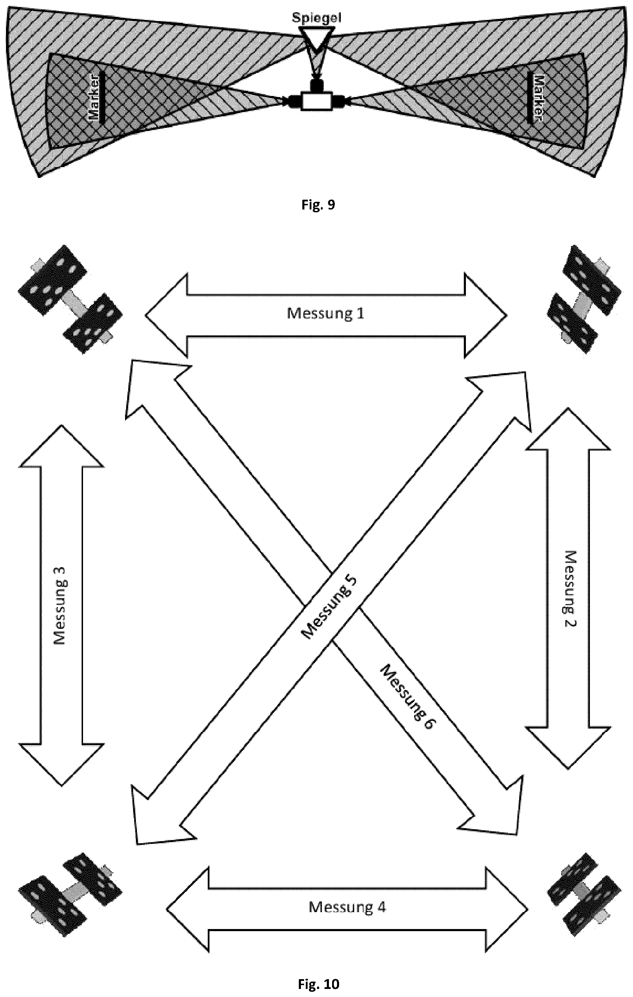

Die Figuren 6 bis 9 zeigen verschiedene Aufbaumöglichkeiten, die bei der Kalibration des Messkopfes zum Einsatz kommen können. Zur Kalibration des Messkopfes muss immer eine Markierung gleichzeitig von zwei Kameras aufgenommen werden. Aus diesem Grund sind Überlappungen der Sichtbereiche der einzelnen Kameras für die Kalibration notwendig. Hierbei handelt es sich um eine Stereokalibration die zum Beispiel, wie in Figur 6 abgebildet mit einer mit einem Fischaugenobjektiv ausgestatteten Kamera, zwei Markierungen und zwei Kameras mit schmalem Blickfeld durchgeführt werden kann. Figur 7 zeigt dementsprechend eine Konfiguration mit drei Markierungen und vier Kameras mit schmalem Blickfeld. Figur 8 zeigt eine Konfiguration mit vier Markierungen und 5 Kameras mit schmalem Blickfeld wohingegen Figur 9 eine Anordnung zeigt, die sich eines zusätzlichen Spiegels bedient, um die Kalibration anhand von zwei Markierungen und drei Kameras mit schmalem Blickfeld durchzuführen.

Figur 10 zeigt beispielhaft die Kalibration des Messraums, die zur Erstellung des zuvor beschriebenen absoluten Koordinatensystems notwendig ist. Die Inspektionsvorrichtung führt eine Vermessung der relativen Positionen der Markierungen mit dem Messkopf durch. Anschließend wird ein Koordinatensystem generiert, in dem alle Markierungen mit ihren entsprechenden Positionen enthalten sind. Dieser Vorgang kann vorzugsweise automatisiert durchgeführt werden, wenn der frei bewegliche Roboterarm den Messkopf so bewegt, dass alle Markierungen gemäß den zuvor erläuterten Prinzipien erfasst werden. Mit anderen Worten, die Kalibration des Messraums findet statt, indem die relativen Positionen der Markierungen zueinander erfasst und mit der relativen Position des Messkopfes zu den Markierungen abgeglichen werden. Dabei können diese Positionen nach einer vorbestimmten Reihenfolge bestimmt werden oder nach einem Schema, das ausgehend von der Position des Messkopfes im Messraum bestimmt wird.

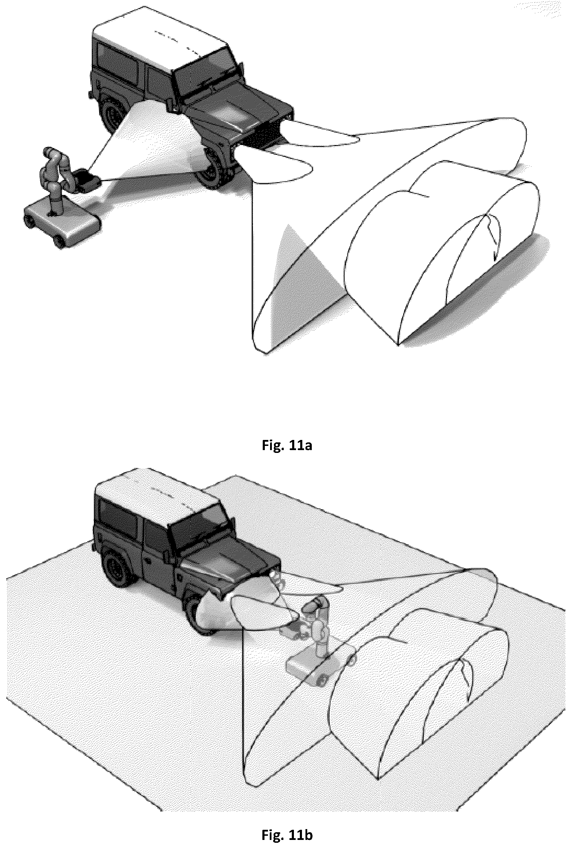

Figur 11 zeigt beispielhaft, wie die Inspektionsvorrichtung ein Fahrzeug eigenständig erfasst, um es herumfährt und dabei die unterschiedlichen Messungen durchführt, die bei der Inspektion des Fahrzeugs durchgeführt werden sollen. Auf Figur 11a ist beispielhaft die Vermessung einer Seitenwand des Fahrzeugs zu sehen während die Inspektionsvorrichtung in Figur 11b die Ausrichtung der Scheinwerfer und/oder der in der Front des Fahrzeugs angebrachten Radarsensoren vermisst. Weitere von den zuvor erwähnten Messungen können dabei zeitgleich durchgeführt werden.

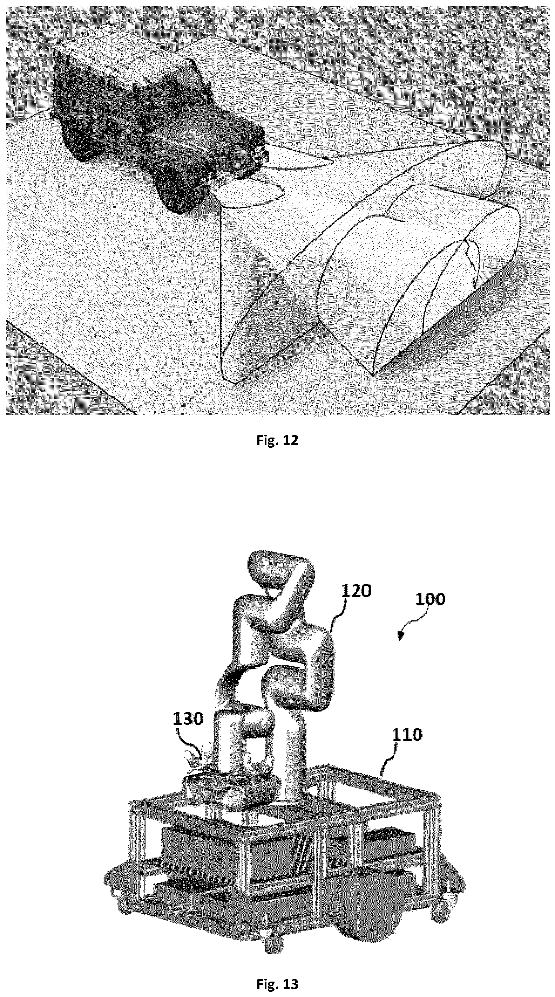

Figur 12 zeigt ein Beispiel für einen erzeugten digitalen Zwilling. Zu sehen sind sämtliche durch die Inspektionsvorrichtung erfassten Oberflächen, sowie verschiedene vom Fahrzeug ausgestrahlte Wellen, wie die Lichtkegel der Scheinwerfer und die Radarkeule des Frontradars.

Figur 13 zeigt eine beispielhafte Abbildung der Inspektionsvorrichtung 100. In dieser Abbildung sind die mobile Plattform 110 der Inspektionsvorrichtung und der auf ihr montierte Positionierarm beziehungsweise Roboterarm 120 als Hauptkomponenten sichtbar. Ferner zeigt die Abbildung den am Ende des Roboterarms 120 angebrachten Messkopf 130, in den die Vielzahl von Kameras und der Projektor integriert oder worauf die Vielzahl von Kameras und der Projektor mittels entsprechender Montagepunkte angebracht sein können.

## Patentansprüche

1. Vorrichtung für Bilderfassung und Projektion für eine Inspektionsvorrichtung umfassend:
eine Kameraeinheit zur visuellen Erfassung einer Umgebung der Inspektionsvorrichtung;
eine Projektoreinheit zur Projektion von Licht auf eine Projektionszielfläche; wobei
die Projektionseinheit dazu eingerichtet ist, visuelle Informationen auf eine Vielzahl unterschiedlich beschaffener und von der Kameraeinheit erfassten Oberflächen zu projizieren.

2. Die Vorrichtung für Bilderfassung und Projektion gemäß Anspruch 1, wobei die Projektionseinheit ein Projektor zur Projektion statischer oder bewegter Bilder ist.

3. Die Vorrichtung für Bilderfassung und Projektion gemäß zumindest einem der vorhergehenden Ansprüche, wobei
die Kameraeinheit beispielsweise mindestens eine 2D-Kamera ist, die dazu eingerichtet ist ein 3D-Bild eines Messobjekts anhand einer Projektion der Projektoreinheit auf die Projektionszielfläche zu erstellen.

4. Die Vorrichtung für Bilderfassung und Projektion gemäß zumindest einem der vorhergehenden Ansprüche, wobei
die Kameraeinheit eine 3D-Kamera ist.

5. Die Vorrichtung für Bilderfassung und Projektion gemäß zumindest einem der vorhergehenden Ansprüche, wobei
Die Vorrichtung für Bilderfassung und Projektion dazu eingerichtet ist, die Verzerrung eines Bildes anhand eines 3D-Bildes der Projektionszielfläche so festzulegen, dass Unebenheiten auf der Projektionsfläche des Messobjekts ausgeglichen werden.

6. Die Vorrichtung für Bilderfassung und Projektion gemäß zumindest einem der vorhergehenden Ansprüche, wobei
die Vorrichtung für Bilderfassung und Projektion dazu eingerichtet ist eine dynamische Anpassung des projizierten Bildes an die Umgebungsbedingungen rund um ein Messobjekt anzupassen.

7. Die Vorrichtung für Bilderfassung und Projektion gemäß zumindest einem der vorhergehenden Ansprüche, wobei
die Vorrichtung für Bilderfassung und Projektion dazu eingerichtet ist, interaktive Inhalte oder eine interaktive Bedienoberfläche auf einer Projektionszielfläche anzuzeigen.

8. Die Vorrichtung für Bilderfassung und Projektion gemäß zumindest einem der vorhergehenden Ansprüche, wobei
die Vorrichtung für Bilderfassung und Projektion dazu eingerichtet ist, relevante Bereiche einer Projektionszielfläche automatisch zu erkennen und durch eine Lichtprojektion hervorzuheben.

9. Die Vorrichtung für Bilderfassung und Projektion gemäß zumindest einem der vorhergehenden Ansprüche, wobei
die Vorrichtung für Bilderfassung und Projektion dazu eingerichtet ist, eine Benutzeroberfläche zu projizieren und Bewegungen und Berührungen eines Benutzers in Echtzeit zu erfassen.

10. Die Vorrichtung für Bilderfassung und Projektion gemäß zumindest einem der vorhergehenden Ansprüche, wobei
die Vorrichtung für Bilderfassung und Projektion dazu eingerichtet ist, Kalibriermuster und/oder eine interaktive Positionierungshilfe auf eine Projektionszielfläche zu projizieren.
